# EUROPÄISCHE PATENTSCHRIFT

(11) **EP 3 329 575 B1**
(45) Veröffentlichungstag und Bekanntmachung des Hinweises auf die Patenterteilung: **01.05.2019**
(21) Anmeldenummer: 16735587.4
(22) Anmeldetag: 14.06.2016
(51) Int. Cl.: H02J 7/14, B60R 16/03, H02M 3/158, H02M 3/28, H02M 1/00

(54) **VERFAHREN UND VORRICHTUNG ZUM BETREIBEN EINES ELEKTRISCHEN SYSTEMS, ELEKTRISCHES SYSTEM**
METHOD AND APPARATUS FOR OPERATING AN ELECTRICAL SYSTEM, ELECTRICAL SYSTEM
PROCÉDÉ ET DISPOSITIF POUR OPÉRER UN SYSTÈME ÉLECTRIQUE, SYSTÈME ÉLECTRIQUE

(30) Priorität: 28.07.2015 DE 102015214221
(43) Veröffentlichungstag der Anmeldung: 06.06.2018
(73) Patentinhaber: Robert Bosch GmbH, 70442 Stuttgart (DE)
(72) Erfinder: ESTEGHLAL, Gholamabas, 70499 Stuttgart -Weilimdorf (DE); KRETSCHMER, Markus, 74385 Pleidelsheim (DE); HAEFELE, Frank, 74343 Sachsenheim-Kleinsachsenheim (DE)
(86) Internationale Anmeldenummer: PCT/EP2016/063629
(87) Internationale Veröffentlichungsnummer: WO 2017/016738

(56) Entgegenhaltungen:
- EP-A2- 1 143 591
- EP-A2- 1 578 010
- DE-A1-102013 001 564
- JP-A- H11 127 573
- US-A1- 2004 041 473

## Beschreibung

Die Erfindung betrifft ein Verfahren zum Betreiben eines elektrischen Systems, das einen Hochspannungsabschnitt und einen Niedrigspannungsabschnitt aufweist, die durch einen Gleichspannungswandler elektrisch miteinander verbunden sind, wobei der Niedrigspannungsabschnitt wenigstens einen wiederaufladbaren Energiespeicher und zumindest einen elektrischen Verbraucher aufweist, und wobei der Gleichspannungswandler in Abhängigkeit von einer auf den Niedrigspannungsabschnitt wirkenden elektrischen Last betrieben wird.

Weiterhin betrifft die Erfindung eine Vorrichtung zum Betreiben des elektrischen Systems, die ein Steuergerät aufweist, das den Gleichspannungswandler in Abhängigkeit von einer auf den Niedrigspannungsabschnitt wirkenden Last betreibt.

Weiterhin betrifft die Erfindung ein elektrisches System mit einer derartigen Vorrichtung.

### Stand der Technik

Elektrische Systeme mit Gleichspannungswandlern zur elektrischen Verbindung eines Niedrigspannungsabschnitts mit einem Hochspannungsabschnitt sind aus dem Stand der Technik grundsätzlich bekannt. Der Gleichspannungswandler arbeitet dabei im Allgemeinen als Spannungssteller, der den Spannungsunterschied zwischen den beiden Abschnitten reguliert. Dabei ist es von Vorteil, wenn die Regulierung in Abhängigkeit von einer tatsächlich auf den Niedrigspannungsabschnitt wirkenden elektrischen Last erfolgt. Bisher findet jedoch keine Abschätzung oder Erfassung der tatsächlich wirkenden Last statt. Stattdessen werden Informationen einer übergeordneten Distanz, die einen Verbraucher, der den Niedrigspannungsabschnitt belastet, ein- oder abschaltet, dazu genutzt, den Gleichspannungswandler anzusteuern. Aus der Offenlegungsschrift EP 1143 591 A2 ist ein Verfahren zur Regelung eines Parallelbetriebs mehrerer Gleichspannungswandler bekannt.

### Offenbarung der Erfindung

Das erfindungsgemäße Verfahren mit den Merkmalen des Anspruchs 1 hat den Vorteil, dass auf das Zurückgreifen auf Informationen einer übergeordneten Instanz verzichtet werden kann. Stattdessen wird eine aktuell wirkende Last direkt ermittelt beziehungsweise abgeschätzt, und zwar auf Basis von einfach zu erfassenden Daten. Dadurch kann auf einen Informationsaustausch mit der übergeordneten Instanz verzichtet und die Ansteuerung des Gleichspannungswandlers in Kenntnis der ermittelten Last präzise durchgeführt werden. Die Erfindung sieht dazu vor, dass zum Bestimmen der Last alle durch den Gleichspannungswandler fließenden Ströme erfasst und addiert werden. Die auf den Niedrigspannungsabschnitt wirkende Last wird somit in Abhängigkeit von den von dem Gleichspannungswandler geleiteten Strömen ermittelt. Dabei wird nicht zwischen Verbrauchern oder Energieerzeugern beziehungsweise Energiespeichern unterschieden. Wird der wiederaufladbare Energiespeicher beispielsweise aufgeladen, so zieht er ebenfalls Energie aus dem Gleichspannungswandler und stellt insofern ebenfalls einen Verbraucher dar. Die auf Basis der Ströme ermittelte Last entspricht somit nicht der real mit dem Niedrigspannungsabschnitt verbundenen elektrischen und aktivierten Verbraucher. Dies ist jedoch kein Nachteil, weil aus Sicht des Gleichspannungswandlers der Energiespeicher ebenfalls an den Verbraucher, wie oben bereits erläutert, darstellt. Beim Einschalten mehrerer Verbraucher werden mehrere Teillasten erzeugt, die auf den Niedrigspannungsabschnitt wirken. Diese werden zusammen als (Gesamt-) Last verstanden. Die Last wird durch das Aufaddieren der Ströme des Gleichspannungswandlers und multiplizieren mit der Ausgangsspannung des Gleichspannungswandlers berechnet. In Kenntnis der so ermittelten (Gesamt-) Last lässt sich nun der Gleichspannungswandler optimal ansteuern, beispielsweise um Spannungseinbrüche zu vermeiden. Insbesondere ist vorgesehen, dass zwischen einer Grundlast (insbesondere nach Ein- beziehungsweise Ausschalten eines Verbrauchers mehr als eine Sekunde abgelaufen), einer Wechsellast (insbesondere nach Ein- beziehungsweise Ausschalten eines Verbrauchers weniger als eine Sekunde und mehr als eine Millisekunde abgelaufen) und einer Spitzenlast (insbesondere nach Ein- beziehungsweise Ausschalten eines Verbrauchers wenigster als eine Millisekunde abgelaufen) unterschieden wird.

Gemäß einer bevorzugten Weiterbildung der Erfindung ist vorgesehen, dass zum Bestimmen der Grundlast eine Ausgangsspannung des Gleichspannungswandlers erfasst wird. Aus der Ausgangsspannung des Gleichspannungswandlers und den Strömen lässt sich die Grundlast berechnen.

Insbesondere ist dazu vorgesehen, dass zum Bestimmen der Grundlast die addierten Ströme als Gesamtstrom mit der Ausgangsspannung des Gleichspannungswandlers ohne Wechselanteile multipliziert werden. Bevorzugt werden die Ströme auf die Niederspannungsseite umgerechnet, wenn sie auf der Hochspannungsseite gemessen werden. Eine Umstellung auf die Hochspannungsseite ist jedoch ebenfalls denkbar, wenn die Eingangsspannung anstelle der Ausgangsspannung des Gleichspannungswandlers gemessen wird. Die Grundlast wird bevorzugt durch eine geeignete Filterung aus der Gesamtlast berechnet.

Weiterhin ist erfindungsgemäß vorgesehen, dass zum Bestimmen einer Spitzenlast ein Gradient der addierten Ströme ermittelt wird. Die Spitzenlast wird aus dem Gradienten des (Gesamt-) Stroms und der Ausgangsspannung und einem Umrechnungsfaktor berechnet. Die Berechnung findet dabei bevorzugt in einem sehr schnellen Zeitraster von beispielsweise 100 µs statt. Auf Basis des Gradienten lässt sich eine mögliche zukünftige elektrische Belastung vorhersagen und bereits vor Eintreten dieses Ereignisses eine entsprechende Gegenmaßnahme einleiten, um dem Ereignis entgegenzuwirken. Wird eine zu große positive beziehungsweise zu große negative Spitzenlast erkannt, kann beispielsweise der Betrieb des Gleichspannungswandlers durch Vorgabe der Soll-Spannung angepasst werden.

Erfindungsgemäß ist vorgesehen, dass die Spitzenlast mit einem vorgebbaren Grenzwert verglichen wird, und dass bei Überschreiten des Grenzwertes Maßnahmen zum Verringern der Spitzenlast eingeleitet werden.

Weiterhin ist bevorzugt vorgesehen, dass als Gleichspannungswandler ein Multiphasenwandler mit mehreren Gleichspannungswandlermodulen betrieben wird. Damit handelt es sich bei dem Gleichspannungswandler um einen skalierbaren Gleichspannungswandler, bei dem insbesondere in Abhängigkeit einer geforderten Leistung mehr oder weniger Gleichspannungswandlermodule betrieben werden. Insbesondere hier ergeben sich Vorteile des erfindungsgemäßen Verfahrens. Dann, wenn in einem aktuellen Normalbetrieb nicht alle Gleichspannungswandlermodule des Multiphasenwandlers betrieben werden und eine kritische Spitzenlast erfasst wird, kann durch das Hinzuschalten weiterer Gleichspannungswandlermodule die Spitzenlast auf alle aktivierten Gleichspannungswandlermodule verteilt werden. Durch das vorteilhafte Bestimmen der Last des Niedrigspannungsabschnitts beziehungsweise der Niederspannungsseite lässt sich somit der Multiphasenwandler derart betreiben, dass eine Spitzenlast besser verteilt und dadurch die Lebensdauer und Belastung des Gleichspannungswandlers verbessert werden.

Weiterhin ist bevorzugt vorgesehen, dass zum Bestimmen einer Wechsellast Spannungsänderungen in dem Niedrigspannungsabschnitt überwacht werden. Durch das Erfassen der Spannungsänderungen lässt sich das Einschalten oder Ausschalten von Verbrauchern, die mit dem Niedrigspannungsabschnitt verbunden sind, ermitteln. In Kenntnis der Wechsellast lässt sich somit der Betrieb des Gleichspannungswandlers an aktuelle Änderungen des Betriebs des Niedrigspannungsabschnitts anpassen.

Die erfindungsgemäße Vorrichtung mit den Merkmalen des Anspruchs 9 zeichnet sich dadurch aus, dass das Steuergerät speziell dazu hergerichtet ist, das erfindungsgemäße Verfahren durchzuführen. Es ergeben sich hierdurch die bereits genannten Vorteile.

Das erfindungsgemäße elektrische System mit den Merkmalen des Anspruchs 10 zeichnet sich durch die erfindungsgemäße Vorrichtung aus. Es ergeben sich hierdurch die bereits genannten Vorteile.

Im Folgenden soll die Erfindung anhand der Zeichnung näher erläutert werden. Dazu zeigen
- Figur 1: eine schematische Darstellung eines elektrischen Systems eines Kraftfahrzeugs,
- Figur 2: einen Aufbau eines Regelsystems des elektrischen Systems,
- Figur 3: eine schematische Darstellung eines vorteilhaften Betriebsstrategie-Moduls des elektrischen Systems und
- Figur 4: ein Verfahren zum Bestimmen einer Last des elektrischen Systems.

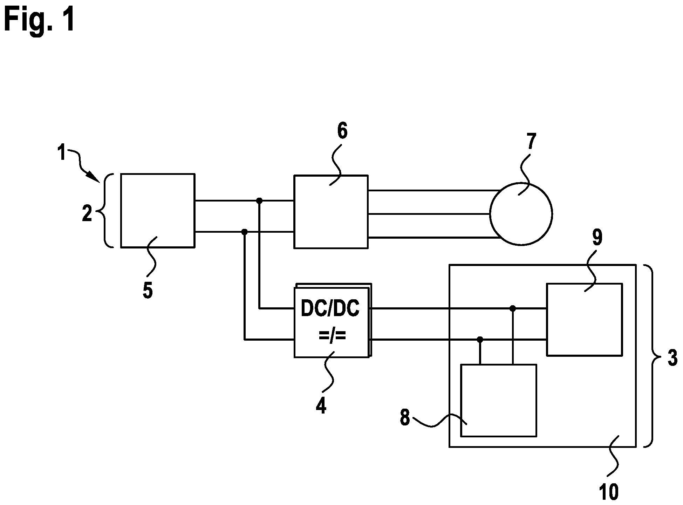

Figur 1 zeigt in einer vereinfachten Darstellung ein elektrisches System 1 eines hier nicht näher dargestellten Kraftfahrzeugs. Das elektrische System 1 weist einen Hochspannungsabschnitt 2 und einen Niedrigspannungsabschnitt 3 auf, die elektrisch durch einen als Multiphasenwandler 4 ausgebildeten Gleichspannugswandler miteinander verbunden sind. Der Hochspannungsabschnitt 2 umfasst vorliegend einen wiederaufladbaren Hochspannungsenergiespeicher 5, einen Wechselrichter 6 sowie eine elektrische Maschine 7, die durch den Wechselrichter 6 betrieben wird. Die elektrische Maschine 7 kann dabei motorisch oder generatorisch betrieben werden und ist insbesondere als Antriebsmaschine des Kraftfahrzeugs ausgebildet. Der Niedrigspannungsabschnitt 3 umfasst einen Niedrigspannungsenergiespeicher 8, der ebenfalls wiederaufladbar ausgebildet ist, sowie einen oder mehrere Verbraucher 9. Zusammen bilden der Energiespeicher 8 und die Verbraucher 9 das Bordnetz 10 des Kraftfahrzeugs.

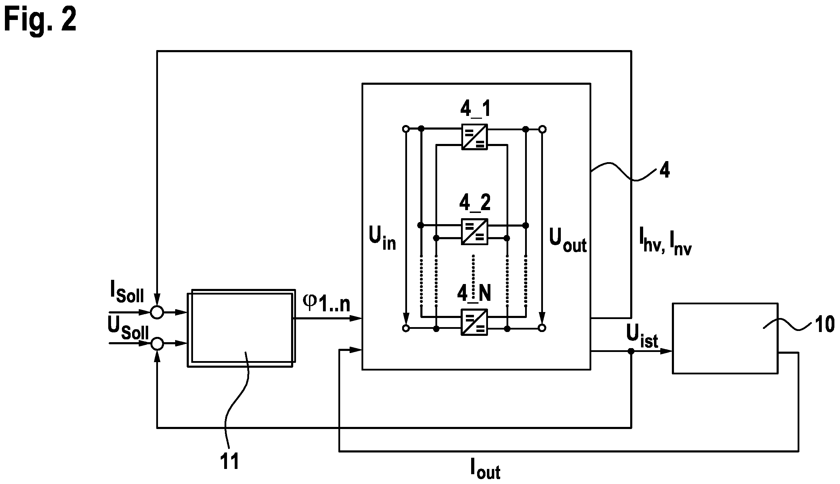

Figur 2 zeigt eine weitere Darstellung des elektrischen Systems 1 mit einem Regler-Komplex 11, mit dem Multiphasenwandler 4, der N parallel geschalteten Gleichspannungswandlermodule 4_1, 4_2, ..., 4_N aufweist. Der Multiphasenwandler 4 weist eine hochspannungsabschnittsseitige Eingangsspannung Uᵢₙ sowie eine niedrigspannungsabschnittsseitige Ausgangsspannung Uₒᵤₜ auf, die sich aus der Parallelschaltung und dem Betrieb der Gleichspannungswandlermodule 4_1, 4_2 bis 4_N ergibt. Durch das Ansteuern der Gleichspannungswandlermodule des Multiphasenwandlers 4 ergibt sich eine Ist-Spannung Uᵢₛₜ, die dem Bordnetz 10 zur Verfügung gestellt wird. Dem Reglerkomplex 11 werden ein Soll-Strom Iₛₒₗₗ sowie eine Soll-Spannung Uₛₒₗₗ sowie ein Ist-Strom des Multiphasenwandlers 4 auf der Hochspannungsseite Iₕᵥ sowie der Niedrigspannungsseite Iₙᵥ zugeführt. Insbesondere hieraus und aus dem Ist-Strom Iₒᵤₜ ergibt sich die Ansteuerung des Multiphasenwandlers 4.

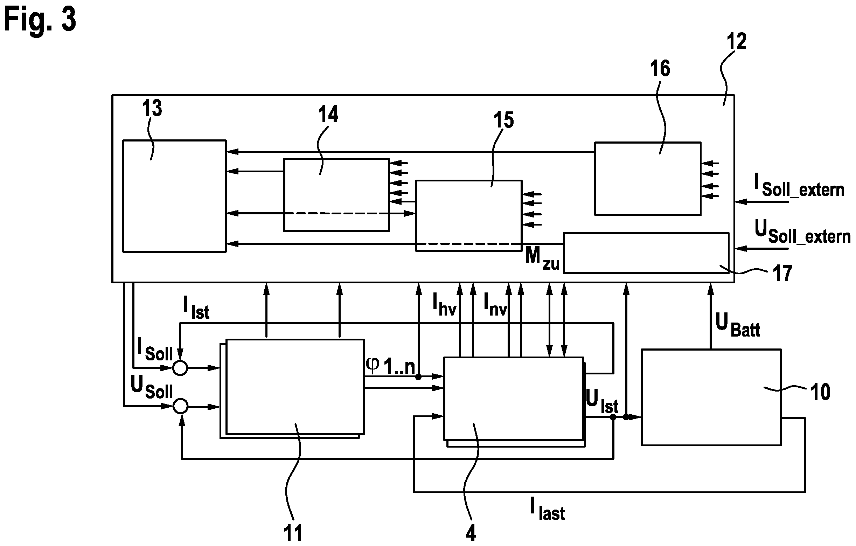

Figur 3 zeigt eine schematische Darstellung einer Betriebsstrategieinstanz, die als Betriebsstrategiemodul 12 eines Steuergeräts des Kraftfahrzeugs ausgebildet ist. Das Betriebsstrategie-Modul 12 entscheidet in Abhängigkeit von einem aktuellen Betriebspunkt des elektrischen Systems 1, wie viele Gleichspannungswandlermodule 4_1, 4_2 ... 4_N beziehungsweise welche Teile eines Moduls, wie beispielsweise ein Tiefsatzsteller, aktiv sein sollen. Die Betriebsstrategieinstanz erhält als Zustandsgröße die gewünschte Spannung im Ausgang U_{soll_extrern}, die aktuellen Ströme Iₕᵥ und/oder Iₙᵥ auf der Niedrigspannungsseite und/oder der Hochspannungsseite den Betriebsmodus des Multiphasenswandlers 4 (lückender- oder nicht lückender Betrieb), die aktuell am Ausgang des Multiphasenwandlers 4 gemessene Spannung Uᵢₛₜ sowie interne Regelgrößen (Vorsteuerung, Adaptionen und Regelausgangssignal des Regler-Komplexes 11). Optional wird dem Betriebsstrategie-Modul 12 außerdem der Sollstrom Iₛₒₗₗ als Eingangswert I_{soll_extern} sowie eine Sollspannung U_{soll_extern} zugeführt. Damit kann eine externe Instanz einen gewünschten Sollstrom für ein oder mehrere der Module beziehungsweise Gleichspannungswandlermodulen 4_1, 4_2, ..., 4_N vorgeben. Der Ausgang der Betriebsstrategieinstanz stellt neben den Sollströmen Iₛₒₗₗ und Spannungen Uₛₒₗₗ auch Modulzustände M_{zu} bereit.

Das Betriebsstrategie-Modul 12 umfasst ein Modul 13 zur Bestimmung von Sollwerten der Spannung, des Stroms und der Modulzustände, ein Modul 14 zur Lastabschätzung, ein Modul 15 zur Modulzustandsbestimmung, ein Modul 16 zur Stromgleichstellung/Leistungsgleichstellung sowie ein Modul 17 zur Ermittlung eines Ladezustands oder Alterungszustands des Niederspannungsenergiespeichers 8.

Die Betriebsstrategieinstanz erfüllt somit in Kurzform folgende Aufgaben:
Stromgleichstellung/Leistungsgleichstellung: die Module können aufgrund der Toleranz der Bauelemente bei gleicher Belastung unterschiedliche Ströme und/oder Leistungen liefern. Um unterschiedliche Belastungen der Module/Gleichspannungswandler zu verhindern, wird durch eine Modifizierung der Sollströme/Sollleistungen für verschiedene Module der gleiche Strombetrag/Leistungsbetrag erreicht.

Abschätzung Batterieladespannung: wenn die Ladespannung des Niedrigspannungsenergiespeichers 8 nicht zur Verfügung steht, wird dieser durch das Modul 17 abgeschätzt.

Modulzustandsbestimmung: Die aktuellen Zustände der Module werden berechnet. In Abhängigkeit der erfassten Zustände werden diese aktiviert oder deaktiviert. Soll ein Modul nicht per Regler ein- oder abgeschaltet werden, sondern nach einer vorgegebenen Zeit oder Dynamik, dann wird diese Teilfunktion das betroffene Modul oder Teile davon ein- oder abschalten.

Lastabschätzung: Abhängig von den gemessenen Strömen und Ausgangssignalen des Regler-Komplexes 11 wird die am Bordnetz 10 vorliegende eingeschaltete Last abgeschätzt.

Bestimmung Sollwerte: Abhängig von den errechneten Sollströmen, dem Laststrom, externen Sollspannungsvorgaben, eingeschätzter Ladespannung und optional externer Stromsollvorgabe, werden die Sollströme, Spannungen und Sollmodulzustände bestimmt und Reglern beziehungsweise Hardwaretreibern des Multiphasenwandlers 4 zur Verfügung gestellt.

Durch die Betriebsstrategieinstanz beziehungsweise durch das Betriebsstrategie-Modul 12 werden die Gleichspannungswandler des Multiphasenwandlers 4 gleichmäßig belastet, Schaltvorgänge optimiert und die Lebensdauer des elektrischen Systems 1 und des Multiphasenwandlers 4 erhöht.

Werden mehrere der Gleichspannungswandlermodule 4_1, 4_2, ..., 4_N am Ausgang parallel geschaltet, oder bei Resonanzwandlern mit mehreren Tiefsetzstellen (Bucks) am Ausgang, können aufgrund der unterschiedlichen Bauelementtoleranzen unterschiedliche Ströme fließen oder Leistungen erzielt werden. Dies bedeutet, dass die Bauelemente unterschiedlich belastet werden und damit unterschiedlich altern. Dabei hängt die Belastung und Alterung der Bauelemente auch von der die Gleichspannungswandlermodule 4_1, 4_2, ..., 4_N wirkende elektrische Last des Niedrigspannungsabschnitts 3 aus. In Kenntnis der wirkenden Last wäre es daher möglich, den Gleichspannungswandler optimiert anzusteuern.

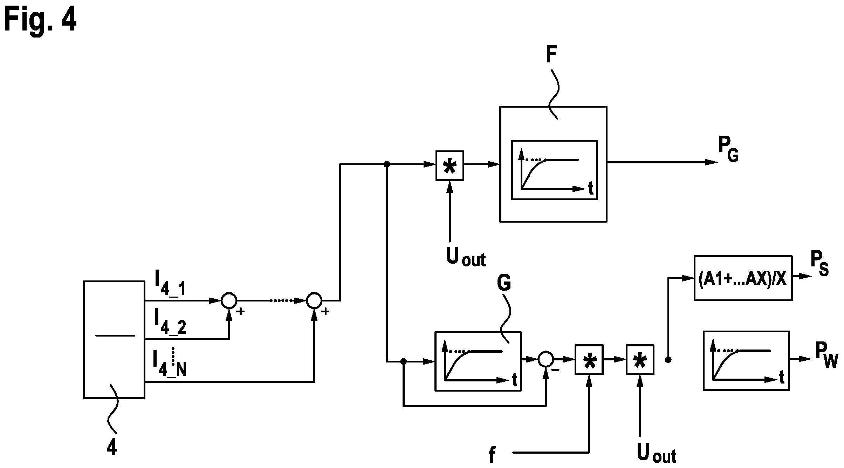

Figur 4 zeigt hierzu in einer vereinfachten Darstellung ein Verfahren zum Bestimmen einer Last P, die auf den Niedrigspannungsabschnitt 3 wirkt. Dabei wird angenommen, dass sich die Last P aus einer Grundlast P_{G}, einer Spitzenlast P_{S} und einer Wechsellast P_{W} zusammensetzt. Um die Last P beziehungsweise die Grundlast, die Spitzenlast und die Wechsellast zu bestimmen, wird folgendermaßen vorgegangen:
Zunächst werden die Ströme I_{4_1}, U_{4_2}, ..., I_{4_N} der einzelnen Gleichspannungswandlermodule 4_1, 4_2, ..., 4_N aufaddiert. Zum Erfassen der Ströme können geeignete Sensoren oder Schaltungen des Multiphasenwandlers 4 genutzt werden, die gegebenenfalls sowieso bereits vorhanden sind. Dadurch, dass die Ströme des Multiphasenwandlers 4 erfasst und aufaddiert werden, wird nicht zwischen Verbrauchern 9 und Energiespeicher 8, der auch als Energieversorger dienen kann, unterschieden. Damit entspricht die im Endeffekt ermittelte Last des Niedrigspannungsabschnitts 3 nicht der Last der eingeschalteten Energie-Verbraucher 9, sondern der Gesamtlast aus Verbraucher 9 und Energiespeicher 8. Aus Sicht des Multiphasenwandlers 4 stellt der Energiespeicher 8 letztendlich ebenfalls einen Verbraucher dar, insbesondere dann, wenn er aufgeladen wird, sodass diese Betrachtung des Niedrigspannungsabschnitts zur Bestimmung der Last keinen Nachteil darstellt. Zum Bestimmen der Grundlast P_{G} wird die Summe der aufaddierten Ströme mit der Ausgangsspannung Uₒᵤₜ multipliziert und das Ergebnis durch einen geeigneten Filter F gefiltert. Bei dem Verfahren werden die Ströme I auf die Niedrigspannungsseite des Multiphasenwandlers 4 umgerechnet, wenn sie auf der Hochspannungsseite gemessen werden. Eine Umstellung auf die Hochspannungsseite ist ebenfalls möglich, wenn die Eingangsspannung Uᵢₙ des Multiphasenwandlers 4 gemessen werden. Durch die Filterung wird aus der so berechneten Gesamtlast die Grundlast bestimmt.

Die Spitzenlast P_{S}, die nur für eine kurze Zeit auftreten darf, wird aus dem Gradienten des erfassten Gesamtstroms berechnet. Zunächst wird der Stromgradient G berechnet und anschließend mit einem geeigneten Umrechnungsfaktor f skaliert und mit der Ausgangsspannung Uₒᵤₜ des Multiphasenwandlers 4 multipliziert. Weil hier beispielsweise eine Stromänderung von 100 kA/s zugelassen wird, findet die Berechnung in einem sehr schnellen Zeitraster, bevorzugt von 100 µs, statt. Durch die beschriebene Berechnung wird zukünftige Spitzenlast P_{S} prognostiziert, sodass bereits vor Eintreten eines möglicherweise schädigenden Ereignisses Gegenmaßnahmen eingeleitet werden können. Wird beispielsweise eine Spitzenlast P_{S} erkannt, die größer als ein vorgebbarer Grenzwert ist, können oder müssen weitere Gleichspannungswandlermodule 4_1, 4_2, ..., 4_N hinzugeschaltet, damit der Gesamtstrom über mehrere dieser Gleichspannungswandlermodule verteilt wird und die Belastung eines einzelnen Gleichspannungswandlermoduls verringert wird. Insbesondere ist dabei vorgesehen, dass zum Bestimmen der Spitzenlast P_{S} ein Mittelwert gebildet, der sich aus (A1 + ... AX) / X ergibt, wobei A für einen gemessenen/berechneten Wert und X für die Anzahl der Messwerte steht.

Zum Bestimmen der Wechsellast P_{W} werden Stromänderungen im Niedrigspannungsabschnitt 3 erfasst. Vorliegend wird von der Wechsellast dann gesprochen, wenn Verbraucher 9 im Bordnetz 10 ein- beziehungsweise abgeschaltet werden. Beim Ein- beziehungsweise Abschalten des jeweiligen Verbrauchers 9 beziehungsweise der damit zusammenhängenden Last, kann es im Bordnetz 10 zu einer Spannungsänderung kommen. Derartige Spannungsänderungen werden bevorzugt vermieden, um unerwünschte Spannungsschwankungen für Steuergerät oder auch für den Energiespeicher 8 zu vermeiden. In Abhängigkeit von der ermittelten Wechsellast P_{W} wird daher die Ansteuerung der Gleichspannungswandlermodule 4_1, 4_2, ..., 4_N angepasst, um die durch das Ein- beziehungsweise Ausschalten hervorgerufenen Spannungsschwankungen zu reduzieren beziehungsweise zu kompensieren.

## Patentansprüche

1. Verfahren zum Betreiben eines elektrischen Systems (1), das einen Hochspannungsabschnitt (2) und einen Niedrigspannungsabschnitt (3) aufweist, die durch einen Gleichspannungswandler (4) elektrisch miteinander verbunden sind, wobei der Niedrigspannungsabschnitt (3) wenigstens einen wiederaufladbaren Energiespeicher (8) und zumindest einen elektrischen Verbraucher (9) aufweist, wobei der Gleichspannungswandler (4) in Abhängigkeit von einer auf den Niedrigspannungsabschnitt (3) wirkenden elektrischen Last (P) betrieben wird, wobei zum Bestimmen der Last (P) alle durch den Gleichspannungswandler (4) fließenden Ströme erfasst und miteinander addiert werden, **dadurch gekennzeichnet, dass** zum Bestimmen einer Spitzenlast (P_{S}) der Last (P) ein Gradient der addierten Ströme ermittelt wird, wobei die Spitzenlast (P_{S}) mit einem vorgebbaren Grenzwert verglichen wird, um bei Überschreiten des Grenzwertes Maßnahmen zum Vermeiden der Spitzenlast (P_{S}) einzuleiten.

2. Verfahren nach Anspruch 1, **dadurch gekennzeichnet, dass** zum Bestimmen einer Grundlast (P_{G}) der Last (P) eine Ausgangsspannung des Gleichspannungswandlers (4) erfasst wird.

3. Verfahren nach Anspruch 2, **dadurch gekennzeichnet, dass** zum Bestimmen der Grundlast (P_{G}) die addierten Ströme als Gesamtstrom mit der Ausgangsspannung (Uₒᵤₜ) des Gleichspannungswandlers (4) ohne Wechselanteile multipliziert werden.

4. Verfahren nach einem der Anspruch 2 oder 3, **dadurch gekennzeichnet, dass** aus dem Gradienten und der aktuellen Grundlast (P_{G}) die Spitzenlast (P_{S}) prognostiziert wird.

5. Verfahren nach einem der vorhergehenden Ansprüche, **dadurch gekennzeichnet, dass** zum Bestimmen einer Wechsellast (P_{W}) der Last (P) Spannungsänderungen in dem Niedrigspannungsabschnitt (3) überwacht werden.

6. Verfahren nach einem der vorhergehenden Ansprüche, **dadurch gekennzeichnet, dass** als Gleichspannungswandler (4) ein Multiphasenwandler (4) mit mehreren parallel geschalteten Gleichspannungswandlermodulen (4_1, 4_2, ..., 4_N) betrieben wird.

7. Vorrichtung zum Betreiben eines elektrischen Systems (1), insbesondere eines Kraftfahrzeugs, das einen Hochspannungsabschnitt (2) und einen Niedrigspannungsabschnitt (3) aufweist, die durch einen Gleichspannungswandler (4) miteinander elektrisch verbunden sind, wobei der Niedrigspannungsabschnitt (3) wenigstens einen wiederaufladbaren Energiespeicher (8) und zumindest einen elektrischen Verbraucher (9) aufweist, mit einem Steuergerät, das in Abhängigkeit von einer auf den Niedrigspannungsabschnitt wirkenden elektrischen Last den Gleichspannungswandler (4) ansteuert, **dadurch gekennzeichnet, dass** das Steuergerät speziell dazu hergerichtet ist, das Verfahren nach einem der Ansprüche 1 bis 6 durchzuführen.

8. Elektrisches System (1), insbesondere eines Kraftfahrzeugs, mit einem Hochspannungsabschnitt (2) und mit einem Niedrigspannungsabschnitt (3), die durch einen Gleichspannungswandler (4) elektrisch miteinander verbunden sind, wobei der Niedrigspannungsabschnitt (3) wenigstens einen wiederaufladbaren Energiespeicher (8) und zumindest einen elektrischen Verbraucher (9) aufweist, **gekennzeichnet durch** eine Vorrichtung nach Anspruch 7.

## Claims

1. Method for operating an electrical system (1) that has a high-voltage section (2) and a low-voltage section (3) that are electrically connected to one another by a DC-DC voltage converter (4), wherein the low-voltage section (3) has at least one rechargeable energy store (8) and at least one electrical consumer (9), wherein the DC-DC voltage converter (4) is operated on the basis of an electrical load (P) acting on the low-voltage section (3), wherein the load (P) is determined by virtue of all the currents flowing through the DC-DC voltage converter (4) being sensed and added to one another, **characterized in that** a peak load (P_{S}) of the load (P) is determined by virtue of a gradient of the added currents being ascertained, wherein the peak load (P_{S}) is compared with a prescribable limit value in order to initiate measures to avoid the peak load (P_{S}) in the event of the limit value being exceeded.

2. Method according to Claim 1, **characterized in that** a base load (P_{G}) of the load (P) is determined by virtue of an output voltage of the DC-DC voltage converter (4) being sensed.

3. Method according to Claim 2, **characterized in that** the base load (P_{G}) is determined by virtue of the added currents as a total current being multiplied by the output voltage (Uₒᵤₜ) of the DC-DC voltage converter (4) without alternating components.

4. Method according to either of Claims 2 and 3, **characterized in that** the peak load (P_{S}) is forecast from the gradient and the present base load (P_{G}).

5. Method according to one of the preceding claims, **characterized in that** an alternating load (P_{W}) of the load (P) is determined by virtue of voltage changes in the low-voltage section (3) being monitored.

6. Method according to one of the preceding claims, **characterized in that** the DC-DC voltage converter (4) operated is a multiphase converter (4) having multiple parallel-connected DC-DC voltage converter modules (4_1, 4_2, ..., 4_N).

7. Apparatus for operating an electrical system (1), particularly of a motor vehicle, that has a high-voltage section (2) and a low-voltage section (3) that are electrically connected to one another by a DC-DC voltage converter (4), wherein the low-voltage section (3) has at least one rechargeable energy store (8) and at least one electrical consumer (9), having a controller that takes an electrical load acting on the low-voltage section as a basis for actuating the DC-DC voltage converter (4), **characterized in that** the controller is set up specifically to perform the method according to one of Claims 1 to 6.

8. Electrical system (1), particularly of a motor vehicle, having a high-voltage section (2) and having a low-voltage section (3) that are electrically connected to one another by a DC-DC voltage converter (4), wherein the low-voltage section (3) has at least one rechargeable energy store (8) and at least one electrical consumer (9), **characterized by** an apparatus according to Claim 7.

## Revendications

1. Procédé de fonctionnement d'un système électrique (1) comprenant une section à haute tension (2) et une section à basse tension (3) reliées électriquement entre elles par un convertisseur continu-continu (4), la section à basse tension (3) comportant au moins un accumulateur d'énergie rechargeable (8) et au moins un récepteur électrique (9), le convertisseur continu-continu (4) fonctionnant en fonction d'une charge électrique (P) agissant sur la section à basse tension (3), tous les courants circulant dans le convertisseur continu-continu (4) étant détectés et additionnés pour déterminer la charge (P), **caractérisé en ce qu'**un gradient des courants additionnés est déterminé pour déterminer une charge maximale (Pₛ) de la charge (P), la charge maximale (Pₛ) étant comparée à une valeur limite prédéterminable pour déclencher des mesures permettant d'éviter la charge maximale (Pₛ) lorsque la valeur limite est dépassée.

2. Procédé selon la revendication 1, **caractérisé en ce qu'**une tension de sortie du convertisseur continu-continu (4) est détectée pour déterminer une charge de base (P_{G}) de la charge (P).

3. Procédé selon la revendication 2, **caractérisé en ce que** les courants additionnés sont multipliés comme courant total par la tension de sortie (U_{Out}) du convertisseur continu-continu (4) sans composantes alternatives pour déterminer la charge de base (P_{G}).

4. Procédé selon l'une des revendications 2 ou 3, **caractérisé en ce que** la charge maximale (P_{S}) est prédite à partir du gradient et de la charge de base actuelle (P_{G}).

5. Procédé selon l'une des revendications précédentes, **caractérisé en ce que** les variations de tension dans la section à basse tension (3) sont surveillées pour déterminer une charge alternative (P_{W}) de la charge (P).

6. Procédé selon l'une des revendications précédentes, **caractérisé en ce qu'**on utilise comme convertisseur continu-continu (4) un convertisseur polyphasé (4) comportant une pluralité de modules convertisseurs continu-continu (4_1, 4_2, ..., 4_N) montés en parallèle.

7. Dispositif destiné à faire fonctionner un système électrique (1), en particulier d'un véhicule automobile, comportant une section à haute tension (2) et une section à basse tension (3) qui sont reliées électriquement entre elles par un convertisseur continu-continu (4), la section basse tension (3) comportant au moins un accumulateur d'énergie rechargeable (8) et au moins un récepteur électrique (9), le dispositif comprenant une unité de commande qui commande le convertisseur continu-continu (4) en fonction d'une charge électrique agissant sur la section à basse tension, **caractérisé en ce que** l'unité de commande est spécialement conçue pour mettre en oeuvre le procédé selon l'une des revendications 1 à 6.

8. Système électrique (1), en particulier d'un véhicule automobile, comprenant une section à haute tension (2) et une section à basse tension (3), qui sont reliées électriquement entre elles par un convertisseur continu-continu (4), la section à basse tension (3) comportant au moins un accumulateur d'énergie rechargeable (8) et au moins un récepteur électrique (9), **caractérisé par** un dispositif selon la revendication 7.
